(19) Europäisches Patentamt / European Patent Office / Office européen des brevets

(11) **EP 2 324 382 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **09782346.2**

(22) Anmeldetag: **28.08.2009**

(51) Int Cl.:
**G02B 6/125** *(2006.01)*    *G02B 6/28* *(2006.01)*

(86) Internationale Anmeldenummer:
**PCT/EP2009/061149**

(87) Internationale Veröffentlichungsnummer:
**WO 2010/023283 (04.03.2010 Gazette 2010/09)**

(54) **MULTIMODE-INTERFERENZKOPPLER UND VERFAHREN ZU SEINER KONSTRUKTIVEN AUSGESTALTUNG**

MULTIMODE INTERFERENCE COUPLER AND METHOD FOR THE STRUCTURAL CONFIGURATION THEREOF

COUPLEUR D'INTERFÉRENCE MULTIMODE ET PROCÉDÉ PERMETTANT SA CONFIGURATION CONSTRUCTIVE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.08.2008 DE 102008044818**

(43) Veröffentlichungstag der Anmeldung:
**25.05.2011 Patentblatt 2011/21**

(73) Patentinhaber:
• **Fraunhofer-Gesellschaft zur Förderung der angewandten Forschung e.V.**
**80686 München (DE)**
• **Universidad de Málaga**
**29071 Málaga (ES)**

(72) Erfinder:
• **KUNKEL, Reinhard**
**15537 Grünheide (DE)**
• **SCHELL, Martin**
**10437 Berlin (DE)**

• **MOLINA-FERNANDEZ, Inigo**
**E-29130 Málaga (ES)**
• **PEREZ, Gonzalo, Wangüemert**
**E-29018 Málaga (ES)**
• **MONUX, Alejandro ,Ortega**
**E-29590 Málaga (ES)**

(74) Vertreter: **Friese Goeden Patentanwälte PartGmbB**
**Widenmayerstraße 49**
**80538 München (DE)**

(56) Entgegenhaltungen:
EP-A- 1 347 318     EP-A- 1 818 699
US-A1- 2006 126 992

• **MOLINA-FERNANDEZ I ET AL: "Improving Multimode Interference Couplers Performance Through Index Profile Engineering" JOURNAL OF LIGHTWAVE TECHNOLOGY, IEEE SERVICE CENTER, NEW YORK, NY, US, Bd. 27, Nr. 10, 15. Mai 2009 (2009-05-15), Seiten 1307-1314, XP011257259 ISSN: 0733-8724**

**Beschreibung**

Die Erfindung betrifft einen Multimode-Interferenzkoppler (MMI) mit mindestens einem Zuführungswellenleiter und mindestens einem Ausgangswellenleiter.

MMI der eingangs genannten Art umfassen einen Wellenleiter, in welchem mehrere optische Moden angeregt werden können. Diesem Wellenleiter werden durch mindestens einen, meist einmodigen, Zuführungswellenleiter optische Signale zugeführt, welche zur Anregung der im MMI ausbreitungsfähigen Moden führen. Sofern mehrere der ausbreitungsfähigen Moden angeregt werden, gelangen diese innerhalb des MMI zur Interferenz. Zumindest ein Maximum des Interferenzmusters wird in einen, meist einmodigen, Ausgangswellenleiter eingekoppelt.

MMI finden insbesondere in Netzwerken zur optischen Datenübertragung Verwendung, um optische Signale von beispielsweise einem Zuführungswellenleiter auf zwei oder mehr Ausgangswellenleiter aufzuteilen. Dazu wird die Geometrie und der Brechungsindex des MMI so ausgestaltet, dass die gewünschte Feldstärke und Phasenlage der erzeugten Ausgangssignale erreicht wird.

Aus der EP 1347318 A2 ist ein optischer Splitter bekannt, dessen Auskoppelverhältnis auf zwei Ausgangswellenleiter einstellbar ist. Hierzu schlägt der Stand der Technik vor, einen photonischen Kristall mit periodisch variierendem Brechungsindex einzusetzen.

Aus der US 2006/126992 A1 ist ein MMI bekannt, welcher Bereiche mit hohem und niedrigem Brechungsindex aufweist und hierdurch als Wellenlängen selektiver Filter wirkt.

Der Erfindung liegt die Aufgabe zugrunde, einen Multimode-Interferenzkoppler und ein Verfahren zu seiner konstruktiven Ausgestaltung anzugeben, welcher eine verbesserte Gleichverteilung der ausgehenden Signale aufweist. Eine weitere Aufgabe der Erfindung besteht darin, einen Multimode-Interferenzkoppler anzugeben, welcher geringere Verluste aufweist. Eine weitere Aufgabe der Erfindung besteht darin, die Intensitätsverteilung und die Phasenverteilung der ausbreitungsfähigen Moden eines MMI so zu kontrollieren, dass sich auch bei MMI mit einer Vielzahl von Ausgängen geringe Verluste und eine gleichmäßige Intensitätsverteilung in allen Ausgangswellenleitern einstellen.

Die Aufgaben werden erfindungsgemäß gelöst durch einen Multimode-Interferenzkoppler (MMI) mit mindestens einem Zuführungswellenleiter und mindestens einem Ausgangswellenleiter, wobei der Multimode-Interferenzkoppler entlang seiner Längserstreckung in Richtung des Zuführungswellenleiters zumindest einen Längsabschnitt aufweist, in welchem der Brechungsindex in einer Richtung, welche im Wesentlichen rechtwinklig zur Richtung des Zuführungswellenleiters verläuft, einen örtlich oszillierenden Verlauf aufweist, wobei die Maximal- und Minimalwerte des örtlich oszillierenden Verlaufs so gewählt sind, dass die Amplitude ausgehend von der Mitte des Multi-Mode-Interferenzkopplers zum Rand zunimmt.

Weiterhin besteht die Lösung der Aufgabe in einem Verfahren zur konstruktiven Ausgestaltung eines Multimode-Interferenzkopplers, bei welchem der Verlauf des Brechungsindex $n(x)$ in Abhängigkeit der Ortskoordinate x entlang der Breite des Multimode-Interferenzkopplers durch folgende Gleichung bestimmt wird:

$$n^2(x) = n_0^2(x) + \sum_{k=0}^{M-1} N_k \cdot \varphi_k(x) \, ,$$

wobei $n_0(x)$ den abschnittsweise konstanten Brechungsindex eines bekannten Multimode-Interferenzkopplers bezeichnet, M die Anzahl der ausbreitungsfähigen Moden des Multimode-Interferenzkopplers darstellt, $N_k$ numerische Koeffizienten sind und $\varphi_k(x)$ einen Satz von Basisfunktionen bezeichnen.

Erfindungsgemäß wurde erkannt, dass in den bisher bekannten MMI Moden höherer Ordnung einen niedrigeren effektiven Brechungsindex erfahren als für ein ideales Verhalten des MMI erforderlich. Daher wird erfindungsgemäß vorgeschlagen, den Brechungsindex des MMI ortsabhängig so zu modifizieren, dass Moden höherer Ordnung einen höheren effektiven Brechungsindex erfahren, ohne dass die Ausbreitung von Moden niedrigerer Ordnung gestört wird. Unter einem effektiven Brechungsindex im Sinne der vorliegenden Erfindung wird dabei ein Mittelwert des Brechungsindex verstanden, welchen die betreffenden Moden entlang ihres Ausbreitungsweges erfahren.

Weiterhin wurde erkannt, dass sich der vorstehend vorgeschlagene Verlauf des Brechungsindex mittels einer Kleinsignalnäherung erreichen lässt, bei welcher zum abschnittsweise konstanten Brechungsindex eines bekannten MMI eine Störung addiert wird.

Die Störung wird dabei durch eine Summe von Basisfunktionen modelliert, welche beispielsweise trigonometrische Funktionen, Rechteckfunktionen, Dreieckfunktionen, Sägezahnfunktionen oder ähnliches umfassen können. Dabei wird jede Basisfunktion mit einem numerischen Koeffizienten gewichtet. Die Größe dieses numerischen Koeffizienten hängt von den gewählten Basisfunktionen ab und kann in einem an sich bekannten Optimierungsverfahren bestimmt werden.

Die Optimierung erfolgt dabei in einigen Ausführungsformen der Erfindung dergestalt, dass ein gewünschtes Zielprofil der optischen Intensität mit dem berechneten Profil verglichen wird und die Parameter $N_k$ so lange angepasst werden, bis die Abweichungen eine vorgebbare Grenze unterschritten haben. Das in dieser Weise erhaltene Profil des Brechungsindex ist im Wesentlichen unabhängig von der Wahl der Basisfunktionen. Diese beeinflussen jedoch das Konvergenzverhalten der Berechnung der Koeffizienten $N_k$ und die Darstellung des Brechungsindexprofils.

Das mit dem erfindungsgemäß vorgeschlagenen Verfahren berechnete Brechungsindexprofil weist meist im Bereich des mehrmodigen Wellenleiters einen oszillierenden bzw. mäanderförmigen Verlauf auf. Der Abstand benachbarter Maxima bzw. Minima beträgt dabei meist zwischen 50 nm und 400 nm. Der Abstand benachbarter Minima bzw. benachbarter Maxima hängt dabei insbesondere von den geometrischen Abmessungen des MMI, der Wellenlänge des eingestrahlten Lichtes und dem gewünschten Interferenzbild ab.

Weiterhin hat sich gezeigt, dass das Interferenzbild günstig beeinflusst wird, wenn der Verlauf des Brechungsindex an den Rändern des MMI zum umgebenden Material keine scharfe Kante bildet, sondern der Brechungsindex allmählich auf den Wert des umgebenden Materials abfällt. Das mit dem erfindungsgemäß vorgeschlagenen Verfahren erhaltene Brechungsindexprofil kann meist nicht durch eine geschlossene analytische Funktion dargestellt werden.

Es hat sich gezeigt, dass durch Verwendung des vorgeschlagenen Verfahrens zur Erzeugung eines Brechungsindexprofils eines MMI innerhalb des MMI ein effektiver Brechungsindex erzeugt wird, welcher für die ausbreitungsfähigen Moden im Wesentlichen quadratisch mit der Modenzahl abnimmt. Dabei kann in einigen Ausführungsformen der Erfindung aufgrund von Fertigungstoleranzen der effektive Brechungsindex $n_{eff}$ eines realen MMI vom berechneten Verhalten abweichen. Dennoch zeigt der effektive Brechungsindex $n_{eff}$ für die ausbreitungsfähigen Moden stets eine bessere Approximation an das ideale quadratische Verhalten als bei Verwendung eines bekannten abschnittsweise konstanten Brechungsindexprofils.

Das erfindungsgemäße Brechungsindexprofil bewirkt eine Verringerung der Verluste, welche zwischen der eingestrahlten und der aus dem MMI ausgekoppelten optischen Leistung entstehen. Dabei kann auch ein idealer MMI Verluste aufweisen; als Verlust im Sinne der vorliegenden Erfindung werden daher nur diejenigen Verluste bezeichnet, welche aufgrund der nicht-idealen Feldverteilung im MMI zusätzlich auftreten.

In einer Ausgestaltung der Erfindung beschreiben die Basisfunktionen $\varphi_k(x)$ die Feldverteilung der anregungsfähigen Moden des Multimode-Interferenzkopplers mit dem Brechungsindex $n_0(x)$. Es hat sich herausgestellt, dass die Bestimmung der numerischen Koeffizienten $n_k$ für diese Basisfunktionen besonders einfach möglich ist.

In einigen Ausgestaltungen der Erfindung werden nicht die Basisfunktionen aller ausbreitungsfähigen Moden bei der Optimierung des Brechungsindexprofils berücksichtigt, sondern lediglich eine Unterauswahl. Diese Unterauswahl kann beispielsweise diejenigen Moden umfassen, welche durch das jeweilige Signal des Zuführungswellenleiters stärker angeregt werden als ein vorgebbarer Grenzwert. Auf diese Weise wird sowohl die Konvergenz der Berechnung beschleunigt als auch die Qualität des erhaltenen Indexprofils $n(x)$ verbessert.

Nachfolgend soll die Erfindung anhand von Ausführungsbeispielen und Figuren ohne Beschränkung des allgemeinen Erfindungsgedankens näher erläutert werden.

Figur 1 zeigt den schematischen Aufbau eines bekannten Multimode-Interferenzkopplers am Beispiel eines 1x1-MMI.

Figur 2 zeigt den Verlauf des Brechungsindex eines bekannten 1x1-MMI und eines 1x1-MMI gemäß der vorliegenden Erfindung.

Figur 3 zeigt den effektiven Brechungsindex des bekannten 1x1-MMI und des 1x1-MMI gemäß der vorliegenden Erfindung in Abhängigkeit der Modenzahl.

Figur 4 zeigt den lateralen Verlauf der Feldstärke in der Ausgangsebene eines bekannten 1x1-MMI.

Figur 5 zeigt den lateralen Verlauf der Feldstärke in der Ausgangsebene eines 1x1-MMI gemäß einem Ausführungsbeispiel der vorliegenden Erfindung.

Figur 6 zeigt den lateralen Verlauf der Feldstärke in den Ausgangswellenleitern eines 2x2-MMI sowie den Verlauf der Feldstärke in der Ausgangsebene für einen herkömmlichen MMI.

Figur 7 zeigt den lateralen Verlauf der Feldstärke in den Ausgangswellenleitern eines 2x2-MMI sowie den Verlauf der Feldstärke in der Ausgangsebene gemäß einem Ausführungsbeispiel der vorliegenden Erfindung.

Figur 8 zeigt den Verlauf des Brechungsindex innerhalb eines 1x4-MMI für einen bekannten MMI und gemäß zwei unterschiedlichen Ausführungsformen der vorliegenden Erfindung.

Figur 9 zeigt den lateralen Verlauf der Feldstärke in der Ausgangsebene und in den Ausgangswellenleitern eines vorbekannten 1x4-MMI.

Figur 10 zeigt den lateralen Verlauf der Feldstärke in der Ausgangsebene und in den Ausgangswellenleitern eines 1x4-MMI gemäß einem Ausführungsbeispiel der vorliegenden Erfindung.

Figur 11 zeigt den lateralen Verlauf der Feldstärke in der Ausgangsebene und in den Ausgangswellenleitern eines 1x4-MMI gemäß einem weiteren Ausführungsbeispiel der vorliegenden Erfindung.

Figur 12 zeigt den lateralen Verlauf der Feldstärke in den Ausgangswellenleitern und in der Ausgangsebene eines bekannten 1x10-MMI.

Figur 13 zeigt den lateralen Verlauf der Feldstärke in den Ausgangswellenleitern und in der Ausgangsebene eines 1x10-MMI gemäß einem Ausführungsbeispiel der vorliegenden Erfindung.

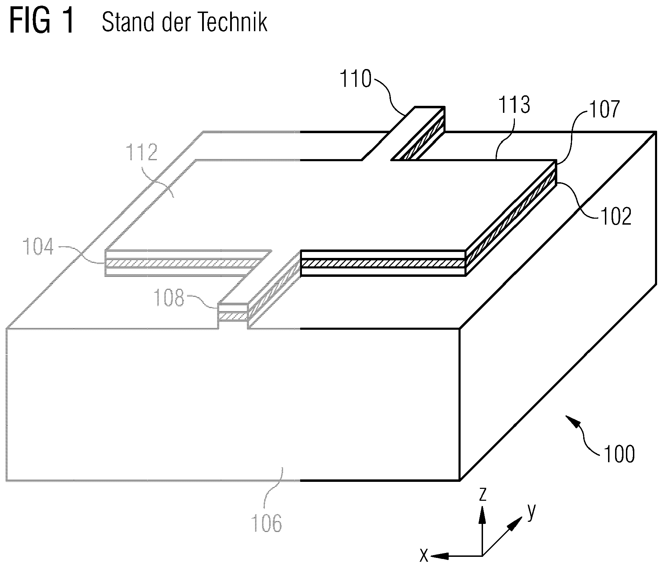

Figur 1 zeigt ein Ausführungsbeispiel eines bekannten Multimode-Interferenzkopplers 100. Der MMI 100 ist auf einem Substrat 106 angeordnet. Das Substrat 106 kann dabei beispielsweise ein Halbleitersubstrat oder ein Glassubstrat umfassen. Ein Halbleitersubstrat kann insbesondere Silizium und/oder Gruppe III-Nitride und/oder eine ternäre oder quaternäre Verbindung von Elementen der III. und V. Hauptgruppe und/oder Elementen der II. und VI. Hauptgruppe enthalten. Das Substrat 106 kann dabei aus einer einzigen Verbindung oder aus einer Mehrzahl übereinander angeordneter Schichten bestehen. Das Substrat kann eine laterale Strukturierung umfassen. Auf dem Substrat können weitere elektronische und/oder optische Bauelemente angeordnet sein.

Der MMI umfasst eine aktive Schicht 104, welche optional an eine Deckschicht 107 und eine Zwischenschicht 102 angrenzt. Die Deckschicht 107 und die Zwischenschicht 102 haben dabei insbesondere die Aufgabe, in einer Richtung z senkrecht zur Oberfläche des Substrats 106 einen diskontinuierlichen Brechungsindexverlauf bereitzustellen, so dass in der aktiven Schicht 104 propagierendes Licht totalreflektiert wird und die Schicht 104 nicht nach oben oder nach unten verlassen kann. Die Schichtdicke der aktiven Schicht 104 ist dabei so gewählt, dass entlang der z-Achse nur eine Mode angeregt wird.

Daneben kann die Deckschicht 107 dazu ausgebildet sein, eine inerte Oberfläche bereitzustellen, um die Zerstörung des MMI 100 durch Reaktion mit der umgebenden Atmosphäre zu verhindern. Die Zwischenschicht 102 kann zusätzlich dazu ausgebildet sein, die Gitterkonstanten anzupassen, die Haftung der Schicht 104 auf dem Substrat 106 zu verbessern und/oder als Ätzstoppschicht ausgebildet sein.

Die Schicht 104 kann insbesondere aus einem Halbleitermaterial, einem Polymer oder aus Glas gefertigt werden. Durch Änderung der chemischen Zusammensetzung und/oder einer Dotierung kann der Brechungsindex der Schicht 104 eingestellt werden.

Die Schicht 104 weist eine laterale Strukturierung auf. Dadurch wird zumindest ein Zuführungswellenleiter 108 und zumindest ein Ausgangswellenleiter 110 erzeugt. Zwischen dem Zuführungswellenleiter 108 und dem Ausgangswellenleiter 110 befindet sich ein breiterer Abschnitt 112, in welchem mehrere ausbreitungsfähige Moden angeregt und zur Interferenz gebracht werden können.

Die Schicht 104 ist im Bereich der Wellenleiter 108 und 110 sowie dem Abschnitt 112 so ausgebildet, dass innerhalb der Schicht 104 geführtes Licht die Schicht 104 nicht seitlich in der x-y-Ebene verlassen kann. Im dargestellten Ausführungsbeispiel wird dies dadurch erreicht, dass die Schicht 104 von Luft umgeben ist, welche einen geringeren Brechungsindex aufweist als das Material der Schicht 104. In weiteren Ausführungsformen der Erfindung kann die Schicht 104 in der x-y-Ebene auch von einem anderen Material umgeben sein.

Im Betrieb des MMI wird durch die mittels des Wellenleiters 108 eingekoppelte Lichtwelle eine Mehrzahl von Moden im Bereich 112 angeregt. Diese kommen zur Interferenz und bilden ein Interferenzbild in der Ausgangebene 113. Ein Teil dieses Interferenzmusters regt im Ausgangswellenleiter 110 eine einmodige Ausgangswelle an.

Das in Figur 1 gezeigte Beispiel weist einen Zuführungswellenleiter 108 und einen Ausgangwellenleiter 110 auf. Daher wird das gezeigte Ausführungsbeispiel als 1x1-MMI bezeichnet. Fallweise können MMI auch mehrere Zufuhr- und/oder Ausgangswellenleiter aufweisen. Gebräuchlich sind beispielsweise 2x2-MMI, 1x4-MMI, 1x2-MMI, 2x4-MMI oder 1x10-MMI.

Das MMI 100 gemäß Figur 1 kann Bestandteil eines integrierten Schaltkreises sein, welcher weitere optische und/oder elektronische Komponenten umfasst.

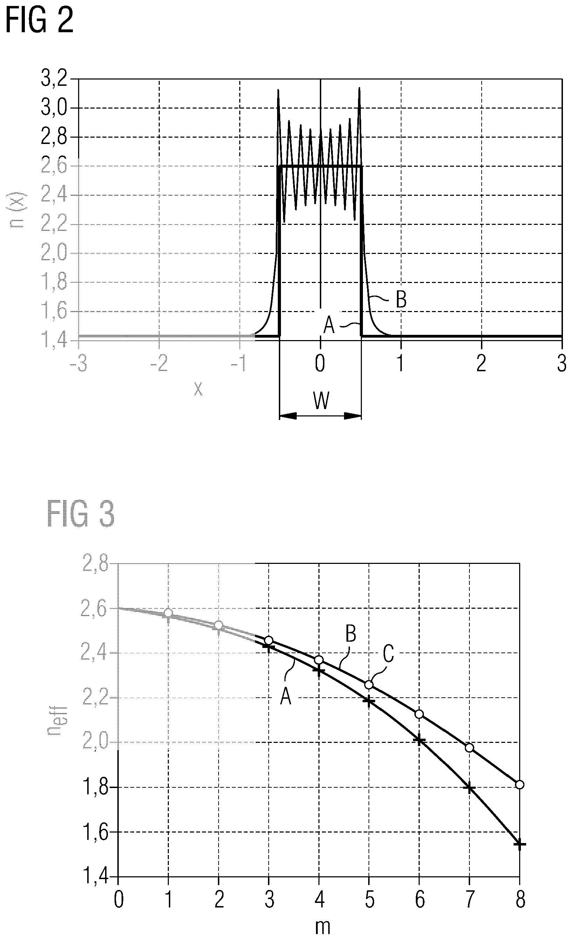

Figur 2 zeigt den Brechungsindex $n(x)$ eines MMI auf der Ordinate und eine Ortskoordinate $x$ auf der Abszisse in einer Richtung, welche im Wesentlichen senkrecht zur Richtung des Zuführungswellenleiters 108 verläuft. Bei der in den Figuren 2 - 13 gewählten Darstellung ist die Ortskoordinate $x$ auf die geometrische Breite $W$ eines vorbekannten MMI mit dem Brechungsindex $n_0(x)$ normiert. Figur 2 stellt dabei den Verlauf des Brechungsindex zumindest in einem Abschnitt des Bereichs 112 des MMI 100 dar. In einigen Ausführungsformen der Erfindung stellt sich der dargestellte Brechungsindexverlauf über die gesamte Ausbreitungsrichtung $y$ des Bereichs 112 ein.

Die mit A bezeichnete Kurve stellt den Verlauf des Brechungsindex $n_0(x)$ eines bekannten MMI dar. Der Brechungsindexverlauf gemäß A ist abschnittsweise konstant. Dies bedeutet, dass im Bereich 112 des MMI mit der Breite $W$ ein erster Brechungsindex $n_0$ vorherrscht, im dargestellten Beispiel 2.6. Rechts und links des Bereichs 112 ist ein Material mit einem zweiten Brechungsindex angeordnet, im Ausführungsbeispiel 1.44.

Erfindungsgemäß wird nun vorgeschlagen, den Brechungsindex $n(x)$ wie in Kurve B dargestellt auszugestalten. Der gemäß Kurve B optimierte Indexverlauf weist im Wellenleiterkern einen alternierenden Verlauf auf, wobei die Amplitude zwischen Minima und Maxima in der Wellenleitermitte am kleinsten ist. Außerhalb des Bereichs 112 ist der Brechungsindex in einer Randschicht zum umgebenden Material etwas angehoben.

Der Abstand zweier benachbarter Maxima bzw. zweier benachbarter Minima beträgt dabei etwa 50nm bis etwa 400nm. Dieser Abstand ist abhängig von der Wellenlänge und den geometrischen Abmessungen des Bereichs 112. Er beträgt etwa 10% bis etwa 50% der Wellenlänge der im Zuführungswellenleiter 108 geführten Strahlung.

Figur 3 zeigt die Auswirkungen des Brechungsindexverlaufes gemäß Figur 2 auf die ausbreitungsfähigen Moden. Die Ordinate der Figur 3 zeigt dabei den effektiven Brechungsindex $n_{eff}$. Auf der Abszisse ist die Modenzahl $m$ aufgetragen. Der effektive Brechungsindex $n_{eff}$ ist dabei der mittlere Brechungsindex des Materials, in welchem die entsprechende Mode propagiert.

Der effektive Brechungsindex $n_{eff}$ wird daher durch örtliche oder zeitliche Inhomogenitäten des Brechungsindex $n(x)$ beeinflusst.

Bei einem herkömmlichen Wellenleiter mit abschnittsweise konstantem Brechungsindex ($n(x) = n_0$) beträgt der effektive Brechungsindex $n_{eff}$ der jeweiligen Mode

$$n_{eff} = n_0 \cdot \sqrt{1 - \frac{1}{2} \cdot \frac{(m+1)^2}{W_{em}}},$$

wobei $W_{em}$ die auf die Wellenlänge der jeweiligen Mode normierte effektive Breite des Bereichs 112 des MMI 100 darstellt, $n_0$ der konstante Brechungsindex eines stufen- bzw. kastenförmigen Brechungsindexprofils eines herkömmlichen MMI ist und m die jeweilige Modenzahl bezeichnet. Diese Gesetzmäßigkeit ist in Figur 3 als Kurve A dargestellt.

Es konnte gezeigt werden, dass die Abbildungseigenschaften eines MMI 100 erheblich verbessert werden, wenn für den effektiven Brechungsindex $n_{eff}$ gilt:

$$n_{eff,m} = n_0 \cdot \left(1 - \frac{1}{2} \cdot \frac{(m+1)^2}{W_n}\right),$$

wobei $W_n$ die auf die Wellenlänge der Fundamentalmode normierte effektive Breite des Bereichs 112 des MMI 100 darstellt. Die oben dargestellte Gesetzmäßigkeit ist in Figur 3 als Kurve B dargestellt. Unter der effektiven Breite im Sinne der vorliegenden Erfindung wird dabei die Breite verstanden, welche die ausbreitungsfähigen Moden entlang ihres Ausbreitungsweges erfahren. Diese kann breiter sein als die geometrische Breite $W$.

Figur 3 zeigt, dass ein Verlauf des effektiven Brechungsindex gemäß Kurve A, welcher für einen herkömmlichen MMI gilt, vom erfindungsgemäßen Verlauf des effektiven Brechungsindex gemäß Kurve B abweicht. Der Betrag der Abweichung steigt mit höherer Modenzahl $m$ an, so dass diese Moden in einem herkömmlichen MMI nur unvollständig zum Interferenzbild in der Ausgangsebene beitragen.

Weiterhin zeigt Fig. 3 berechnete Werte C (Kreise) für den effektiven Brechungsindex der ersten acht Moden in einem erfindungsgemäßen Wellenleiter mit einem Brechungsindexverlauf gemäß Figur 2, Kurve B. Wie aus Figur 3 ersichtlich ist, weichen die berechneten Werte C nicht mehr vom optimalen Kurvenverlauf B ab.

Dabei können in einigen Ausführungsformen aufgrund von Fertigungstoleranzen bei der Realisierung des Brechungsindexverlaufes B gemäß Figur 2 Messwerte für die Punkte C nach Figur 3 vom idealen Verlauf B gemäß Figur 3 abweichen. Dennoch ergibt sich gegenüber den bisher verwendeten MMI eine bessere Annäherung des realisierten effektiven Brechungsindexverlaufes an den idealen Verlauf.

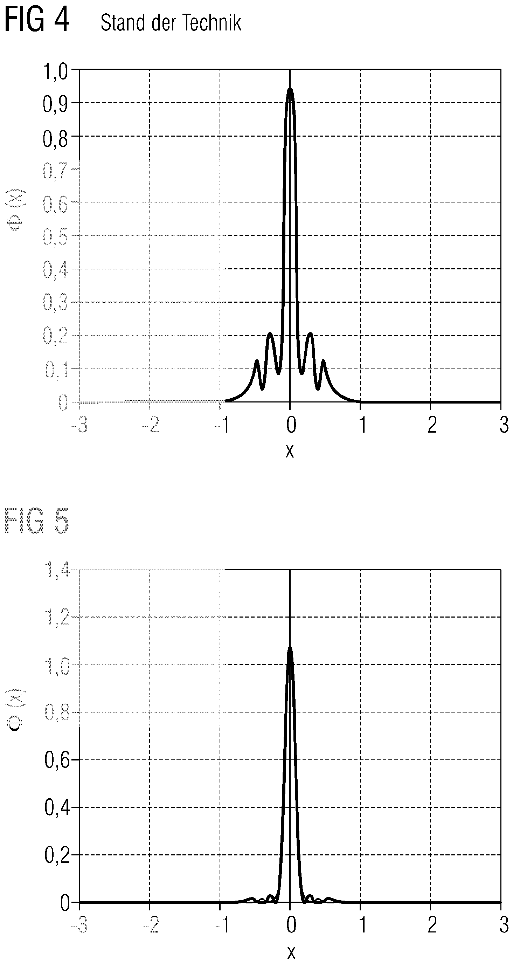

Figur 4 zeigt den lateralen Verlauf der Feldstärke $\Phi(x)$ in der Ausgangsebene 113 des Bereichs 112 für den in Figur 1 dargestellten bekannten 1x1-MMI. Aus Figur 4 ist ersichtlich, dass der Verlauf des effektiven Brechungsindex gemäß Kurve A der Figur 3 dazu führt, dass höhere Moden in nicht optimaler Weise zur Entstehung des Interferenzbildes in der Ausgangsebene 113 beitragen. Daher bilden sich beiderseits des Hauptmaximums Nebenmaxima, welche nicht in den Ausgangswellenleiter 110 an der Stelle $x=0$ einkoppeln können. Daher ist die Feldstärke des Ausgangssignals des MMI 100 niedriger als die Feldstärke des Eingangssignals. Darüber hinaus kann eine unerwünschte Beeinträchtigung der Phasenbeziehung des Ausgangsund des Eingangssignals auftreten.

Figur 5 zeigt den lateralen Verlauf der Feldstärke $\Phi(x)$ in der Ausgangsebene 113 für ein MMI mit einem erfindungsgemäßen Brechungsindexverlauf. Wie aus Figur 5 ersichtlich ist, steigt die Feldstärke des Hauptmaximums auf Kosten der Nebenmaxima an. Somit steht bei dem erfindungsgemäß vorgeschlagenen MMI eine größere Ausgangsleistung im Ausgangswellenleiter 110 zur Verfügung.

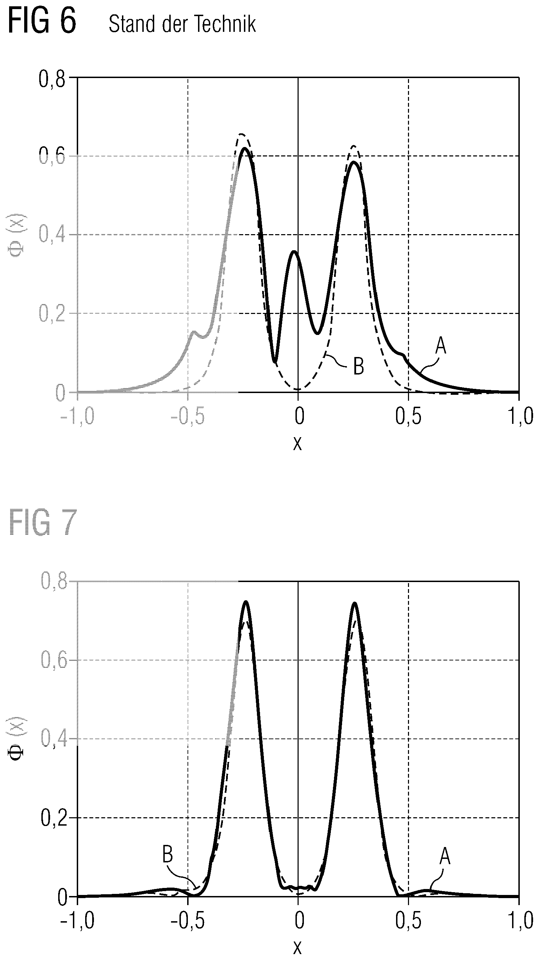

Figur 6 und 7 zeigen den lateralen Verlauf der Feldstärke $\Phi(x)$ in zwei ausgehenden Wellenleitern (Kurve B) sowie in der Ausgangsebene 113 (Kurve A) eines 2x2-MMI. Dabei weisen beide MMI den gleichen geometrischen Aufbau auf. Die in Figur 6 dargestellten Ergebnisse gelten für einen bekannten MMI, also für ein MMI mit einem Brechungsindexverlauf gemäß Kurve A der Figur 2.

Aus Figur 6 ist ersichtlich, dass die Feldstärke $\Phi(x)$ in der Ausgangsebene 113 des MMI 100 gemäß Kurve A wie gewünscht zwei Hauptmaxima aufweist, welche in etwa an der Position der Ausgangswellenleiter 110 liegen. Zwischen beiden Hauptmaxima befindet sich ein Nebenmaximum, welches in etwa 2/3 der Feldstärke der Hauptmaxima erreicht. Zum Rand des MMI fällt die Feldstärke flacher ab als die örtliche Akzeptanz des Ausgangswellenleiters 110. Auf diese Weise kann etwa 1/3 der optischen Leistung in der Ausgangsebene 113 nicht in die Ausgangswellenleiter 110 eingekoppelt werden. Weiterhin unterscheidet sich die in beide Wellenleiter eingekoppelte optische Leistung um etwa 0.4 dB.

Im Gegensatz dazu zeigt Figur 7 den Feldstärkenverlauf $\Phi(x)$ für ein MMI mit einem erfindungsgemäß vorgeschlagenen Verlauf des Brechungsindex. Aus Kurve A der Figur 7 ist ersichtlich, dass aufgrund des erfindungsgemäß vorgeschlagenen Brechungsindexverlaufes die Feldstärke der Hauptmaxima bei Reduzierung der Feldstärke der Nebenmaxima in der Ausgangsebene ansteigt. Die Feldstärke in der Ausgangsebene (Kurve A) sowie die Feldstärke im Ausgangswellenleiter (Kurve B) sind nahezu deckungsgleich. Dies bedeutet, dass die eingestrahlte optische Leistung nahezu vollständig in die Ausgangswellenleiter 110 eingekoppelt wird. Die Verluste im MMI sind daher mit weniger als 0,1 dB geringer. Darüber hinaus ist der Unterschied zwischen den in beide Wellenleiter eingekoppelten Feldstärken vernachlässigbar. Der erfindungsgemäß vorgeschlagene MMI erlaubt somit einen verbesserten Strahlteiler.

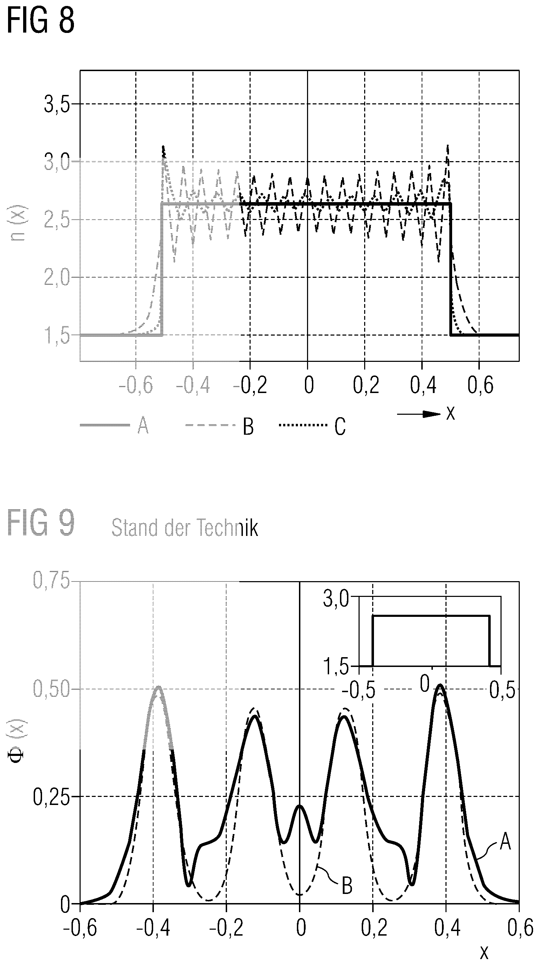

In Figur 8 sind drei verschiedene mögliche Verläufe des Brechungsindex $n(x)$ für einen 1x4-MMI mit 6 $\mu$m Breite gezeigt. Die durchgezogene Linie A zeigt dabei den Brechungsindexverlauf eines bekannten MMI. Das zugehörige Interferenzbild in der Ausgangsebene eines solchen MMI ist in Figur 9 dargestellt.

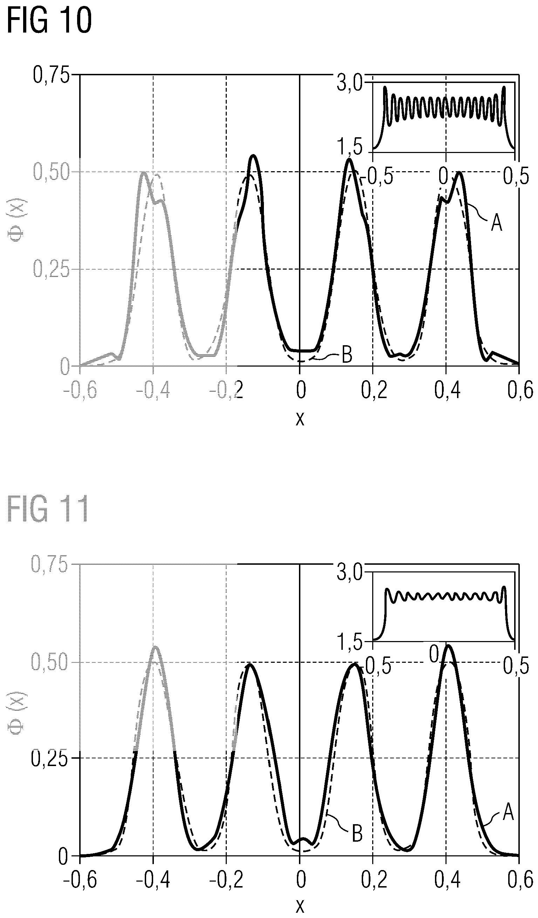

Die strichliert dargestellte Linie B zeigt den Brechungsindexverlauf in einer Ausführungsform der vorliegenden Erfindung. Der Brechungsindex B ist dadurch erhältlich, dass alle ausbreitungsfähigen Moden des MMI als Basisfunktionen zur Berechnung des Brechungsindexverlaufs berücksichtigt werden. Das Interferenzbild in der Ausgangsebene dieses MMI ist in Figur 10 dargestellt.

Darüber hinaus zeigt Figur 8 als punktierte Linie C einen weiteren Verlauf des Brechungsindex gemäß einer weiteren Ausführungsform der vorliegenden Erfindung. Dieser Verlauf des Brechungsindex ist dadurch erhältlich, dass in die Berechnung nur solche Basisfunktionen eingehen, welche die Feldstärkeverteilung von ausbreitungsfähigen Moden angeben, welche vom Feld des Zuführungswellenleiters eine Anregung erfahren, welche oberhalb eines vorgebbaren Grenzwertes liegt.

Die Berücksichtigung einer Unterauswahl anstelle aller ausbreitungsfähigen Moden führt einerseits zu einer schnelleren Konvergenz des vorgeschlagenen Berechnungsverfahrens. Weiterhin werden die Schwankungen des Brechungsindex bzw. die Amplitude der sich ergebenden Mäander verringert. Dadurch kann der Fertigungsaufwand reduziert werden. Das Interferenzbild in der Ausgangsebene dieses MMI ist in Figur 11 dargestellt.

Figur 9 zeigt Kurve A den lateralen Verlauf der Feldstärke $\Phi(x)$ in der Ausgangsebene 113 eines bekannten 1x4-MMI 100.

Als Kurve B ist die Ausgangsleistung in den vier Ausgangswellenleitern des MMI dargestellt. Der Verlauf des Brechungsindex $n(x)$ entlang der Breite des MMI ist abschnittsweise konstant, wie der eingesetzte Kurvenverlauf in Figur 9 zeigt.

Der laterale Verlauf der Feldstärke $\Phi(x)$ in der Ausgangsebene zeigt wunschgemäß vier Hauptmaxima, jedoch dazwischen liegende Nebenmaxima. Diese führen zu einem Intensitätsverlust. Weiterhin ist die Feldstärkeverteilung zwischen den Hauptmaxima unterschiedlich, so dass der bekannte MMI nur eine unvollständige Aufteilung der Eingangsleistung auf vier gleichartige Ausgangswellenleiter vornimmt. Erfindungsgemäß wurde erkannt, dass das Interferenzmuster nach Figur 9 insbesondere deshalb Defizite aufweist, weil Moden höherer Ordnung aufgrund des abweichenden effektiven Brechungsindex einen Phasenfehler aufweisen und daher nicht ordnungsgemäß zur Entstehung des Interferenzmusters beitragen. Dadurch ergibt sich ein Verlust von 0.5 dB und ein gestörtes Gleichgewicht zwischen den Ausgangswellenleitern von 0.6 dB (Kurve B).

Figur 10 zeigt wiederum das Interferenzmuster in der Ausgangsebene als Kurve A sowie die in die Ausgangswellenleiter eingekoppelte Leistung als Kurve B. Der MMI gemäß Figur 10 weist den erfindungsgemäß vorgeschlagenen Verlauf des Brechungsindex nach Kurve B der Figur 8 auf, wie dieser im eingesetzten Kurvenverlauf der Figur 10 nochmals dargestellt ist.

Im Ergebnis zeigt das Interferenzmuster in der Ausgangsebene gemäß Figur 10 einen gleichmäßigeren Verlauf der Feldstärke aller vier Hauptmaxima. Die Nebenmaxima, welche in Figur 9 einen Teil der optischen Leistung der Nutzung entziehen, sind im Interferenzmuster der Figur 10 nur mehr abgeschwächt vorhanden. Der erfindungsgemäße MMI weist somit einen Verlust von 0.15 dB und ein gestörtes Gleichgewicht zwischen den Ausgangswellenleitern von 0.1 dB auf.

Figur 11 zeigt wiederum das Interferenzmuster in der Ausgangsebene als Kurve A sowie die in die Ausgangswellenleiter eingekoppelte Leistung als Kurve B. Der MMI gemäß Figur 11 weist den erfindungsgemäß vorgeschlagenen Verlauf des Brechungsindex nach Kurve C der Figur 8 auf, wie dieser im eingesetzten Kurvenverlauf der Figur 11 nochmals dargestellt ist.

Überraschend hat sich dabei gezeigt, dass durch ein einfacheres Profil des Brechungsindex, welches in einem kürzeren Berechnungsverfahren erhältlich ist und mit geringerem Aufwand realisiert werden kann, dennoch eine verbesserte Signalqualität in den Ausgangswellenleitern 110 erhalten werden kann. So beträgt der zusätzliche Verlust zwischen der Eingangsleistung und der Ausgangsleistung des dargestellten 1x4-MMI im Falle des Ausführungsbeispiels nach Figur 11 nur 0.1dB. Die maximale Feldstärke in den innen liegenden Wellenleitern ist dabei 0.12dB niedriger als in den außen liegenden Wellenleitern.

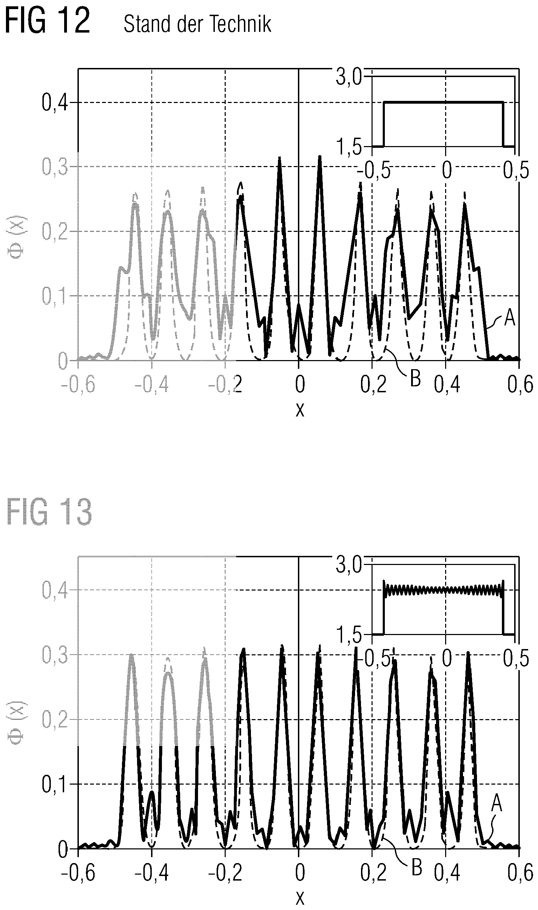

In Figur 12 und 13 ist schließlich ein weiteres Ausführungsbeispiel des erfindungsgemäßen MMI gezeigt. Dargestellt ist der Feldsstärkeverlauf $\Phi(x)$ eines 1x10-MMI, welcher das optische Signal aus einem Zuführungswellenleiter auf zehn Ausgangswellenleiter aufteilt. Der hierzu erforderliche Interferenzbereich 112 weist eine Breite von 20 $\mu$m bei einem Brechungsindex $n_0 = 1.440$ auf.

Figur 12 zeigt wiederum den Verlauf der Feldstärke in der Ausgangsebene (Kurve A) und in den Ausgangswellenleitern (Kurve B) für einen bekannten 1x10-MMI mit abschnittsweise konstantem Brechungsindex, wie dieser im eingesetzten Kurvenverlauf der Figur 12 dargestellt ist. Die Vielzahl angeregter Moden, welche ein Interferenzbild mit 10 Hauptmaxima erfordert, stellt dabei hohe Anforderungen an das Übertragungsverhalten des MMI. Diese Anforderungen werden von dem bekannten MMI nur unvollständig erfüllt. So ist die Summe der Ausgangsleistungen der Ausgangswellenleiter um 1.16 dB niedriger als die eingekoppelte Leistung im Zuführungswellenleiter. Der Unterschied zwischen den am stärksten angeregten Ausgangswellenleitern und den am schwächsten angeregten Ausgangswellenleitern beträgt 1.7dB. Sowohl die Ungleichmäßigkeit des Interferenzmusters als auch die hohen Verluste des Bauelementes liegen in umfangreichen Nebenmaxima begründet, welche sich aufgrund der nicht-idealen Propagation höherer Moden im Wellenleiter einstellen.

Figur 13 zeigt im Vergleich das Interferenzmuster in der Ausgangsebene als Kurve A sowie die in die Ausgangswellenleiter eingekoppelte Leistung als Kurve B. Der MMI gemäß Figur 13 weist den erfindungsgemäß vorgeschlagenen Verlauf des Brechungsindex auf, wie dieser im eingesetzten Kurvenverlauf der Figur 13 dargestellt ist.

Aus Figur 13 ist dabei ersichtlich, dass die Nebenmaxima erheblich abgenommen haben. Entsprechend erreicht der Verlust des erfindungsgemäßen 1x10-MMI einen Wert von 0.28dB. Auch die Gleichmäßigkeit der Anregung in den Ausgangswellenleitern ist wunschgemäß erhöht. Die Differenz zwischen den stärksten und den schwächsten angeregten Ausgangswellenleitern beträgt lediglich 0.42dB.

Dem Fachmann ist selbstverständlich geläufig, dass die Erfindung nicht auf die dargestellten Ausführungsbeispiele beschränkt ist. Vielmehr können bei der Umsetzung der Erfindung Modifikationen und Änderungen vorgenommen werden, ohne die Erfindung an sich wesentlich zu verändern. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus.

**Patentansprüche**

1.    Multimode-Interferenzkoppler (MMI) mit mindestens einem Zuführungswellenleiter (108) und mindestens einem Ausgangswellenleiter (110), wobei der Multimode-Interferenzkoppler (112) entlang seiner Längserstreckung in Richtung des Zuführungswellenleiters (108) zumindest einen Längsabschnitt aufweist, in welchem der Brechungsindex in einer Richtung, welche im Wesentlichen rechtwinklig zur Richtung des Zuführungswellenleiters (108) verläuft, einen örtlich oszillierenden Verlauf aufweist, **dadurch gekennzeichnet, dass** die Maximal- und Minimalwerte des örtlich oszillierenden Verlaufs so gewählt sind, dass die Amplitude ausgehend von der Mitte des Multimode-Interferenzkopplers zum Rand zunimmt.

2.    Multimode-Interferenzkoppler nach Anspruch 1, **dadurch gekennzeichnet, dass** der effektive Brechungsindex $n_{eff}$ für die ausbreitungsfähigen Moden etwa quadratisch mit der Modenzahl abnimmt.

3.    Multimode-Interferenzkoppler nach einem der Ansprüche 1 oder 2, **dadurch gekennzeichnet, dass** der Verlauf des Brechungsindex $n(x)$ in Abhängigkeit der Ortskoordinate $x$ entlang der Richtung, welche im Wesentlichen rechtwinklig zur Richtung des Zuführungswellenleiters (108) verläuft durch folgende Gleichung erhältlich ist:

$$n^2(x) = n_0^2(x) + \sum_{k=0}^{M-1} N_k \cdot \varphi_k(x) \, ,$$

wobei $n_0(x)$ den abschnittsweise konstanten Brechungsindex eines bekannten Multimode-Interferenzkopplers bezeichnet, $M$ die Anzahl der ausbreitungsfähigen Moden des Multimode-Interferenzkopplers darstellt, $N_k$ numerische Koeffizienten sind und $\varphi_k(x)$ einen Satz von Basisfunktionen bezeichnen.

4.    Multimode-Interferenzkoppler nach einem der Ansprüche 1 bis 3, **dadurch gekennzeichnet, dass** der Abstand benachbarter Maximal- und Minimalwerte des örtlich oszillierenden Verlaufs zwischen 50 nm und 400 nm beträgt.

5.    Multimode-Interferenzkoppler nach einem der Ansprüche 3 bis 4, **dadurch gekennzeichnet, dass** die Basisfunktionen $\varphi_k(x)$ die Feldverteilung der Moden des Multimode-Interferenzkopplers mit dem Brechungsindex $n_0(x)$ beschreiben.

6.    Multimode-Interferenzkoppler nach einem der Ansprüche 1 bis 5, **dadurch gekennzeichnet, dass** dieser zwei Zuführungswellenleiter (108) aufweist und die Anzahl der Ausgangswellenleiter (110) zwei oder vier beträgt.

7.    Multimode-Interferenzkoppler nach einem der Ansprüche 1 bis 5, **dadurch gekennzeichnet, dass** dieser genau einen Zuführungswellenleiter (108) aufweist und die Anzahl der Ausgangswellenleiter (110) zwei, vier oder zehn beträgt.

8.    Verfahren zur konstruktiven Ausgestaltung eines Multimode-Interferenzkopplers, **dadurch gekennzeichnet, dass** der Verlauf des Brechungsindex $n(x)$ in Abhängigkeit der Ortskoordinate $x$ entlang der Breite des Multimode-Interferenzkopplers durch folgende Gleichung bestimmt wird:

$$n^2(x) = n_0^2(x) + \sum^{M-1} N_k \cdot \varphi_k(x)$$

wobei $n_0(x)$ den abschnittsweise konstanten Brechungsindex eines bekannten Multimode-Interferenzkopplers bezeichnet, M die Anzahl der ausbreitungsfähigen Moden des Multimode-Interferenzkopplers darstellt, $N_k$ numerische Koeffizienten sind und $\varphi_k(x)$ einen Satz von Basisfunktionen bezeichnen, so dass der Multimode-Interferenzkoppler entlang seiner Längserstreckung in Richtung des Zuführungswellenleiters zumindest einen Längsabschnitt aufweist, in welchem der Brechungsindex in einer Richtung x, welche im Wesentlichen rechtwinklig zur Richtung des Zuführungswellenleiters verläuft, einen örtlich oszillierenden Verlauf aufweist, wobei die Maximal- und Minimalwerte des örtlich oszillierenden Verlaufs so gewählt sind, dass die Amplitude ausgehend von der Mitte des Multimode-Interferenzkopplers zum Rand zunimmt.

9. Verfahren nach Anspruch 8, **dadurch gekennzeichnet, dass** die Basisfunktionen $\varphi_k(x)$ die Feldverteilung der ausbreitungsfähigen Moden des Multimode-Interferenzkopplers mit dem Brechungsindex $n_0(x)$ beschreiben.

10. Verfahren nach Anspruch 8 oder 9, **dadurch gekennzeichnet, dass** die Koeffizienten $N_k$ so bestimmt werden, dass der effektive Brechungsindex $n_{eff}$ für die ausbreitungsfähigen Moden quadratisch mit der Modenzahl abnimmt.

11. Verfahren nach einem der Ansprüche 8 bis 10, **dadurch gekennzeichnet, dass** nur eine Unterauswahl der *M* ausbreitungsfähigen Moden in die Berechnung einbezogen wird.

12. Verfahren nach einem der Ansprüche 8 bis 11, **dadurch gekennzeichnet, dass** die Bestimmung der numerischen Koeffizienten $N_k$ mittels eines rigorous-mode-solving Verfahrens und/oder mittels eines simulated annealing-Verfahrens durchgeführt wird.

13. Integriert-optische Komponente mit einem Multimode-Interferenzkoppler nach einem der Ansprüche 1 bis 7.

14. Computerprogramm mit einem Programmcode, welcher zur Ausführung eines Verfahrens nach einem der Ansprüche 8 bis 12 ausgebildet ist, wenn das Computerprogramm auf einem Computer ausgeführt wird.

15. Computerprogramm mit Programmcode, der auf einem maschinenlesbaren Träger gespeichert ist, zur Durchführung des Verfahrens nach einem der Ansprüche 8 bis 12, wenn das Computerprogramm auf einem Computer ausgeführt wird.

**Claims**

1. Multimode interference coupler (MMI) having at least one supply waveguide (108) and at least one output waveguide (110), wherein the multimode interference coupler (112) has along the longitudinal extension thereof in the direction of the supply waveguide (108) at least one longitudinal section, in which the refractive index has a locally oscillating profile in a direction running substantially rectangular to the direction of the supply waveguide (108), **characterized in that** the maximum and minimum values of the locally oscillating profile are chosen in such a way that, proceeding from the center of the multimode interference coupler, the amplitude increases towards the edge.

2. Multimode interference coupler according to claim 1, **characterized in that** regarding the modes that are able to propagate the effective refractive index $n_{eff}$ decreases e.g. in an approximately quadratic manner witch the mode number.

3. Multimode interference coupler according to any of claims 1 or 2, **characterized in that** the profile of the refractive index $n(x)$ can be obtained depending on the local coordinate x along the direction which runs substantially rectangular to the direction of the supply waveguide (108) by the following equation:

$$n^2(x) = n_0^2(x) + \sum_{k=0}^{M-1} N_k \cdot \varphi_k(x) \ ,$$

wherein $n_0(x)$ is the section-wise constant refractive index of a know multimode interference coupler, *M* is the number of modes that are able to propagate in the multimode interference coupler, $N_k$ are numerical coefficients and $\varphi_k(x)$ is a set of basic functions.

4. Multimode interference coupler according to any of claims 1 to 3, **characterized in that** the distance of adjacent maximum and minimum values of the locally oscillating profile is between 50 nm and 400 nm.

5. Multimode interference coupler according to any of claims 3 to 4, **characterized in that** the basic functions $\varphi_k(x)$ describe the field distribution of the modes of the multimode interference coupler by means of the refractive index $n_0(x)$.

6. Multimode interference coupler according to any of claims 1 to 5, **characterized in that** said coupler has two supply waveguides (108) and the number of output waveguides (110) is two or four.

7. Multimode interference coupler according to any of claims 1 to 5, **characterized in that** said coupler has precisely one supply waveguide (108) and the number of output waveguides (110) is two, four or ten.

8. Method for the constructive design of a multimode interference coupler, **characterized in that** the profile of the refractive index (*n*)x is determined depending on the local coordinate x along the width of the multimode interference coupler by the following equation:

$$n^2(x) = n_0^2(x) + \sum_{k=0}^{M-1} N_k \cdot \varphi_k(x)$$

wherein $n_0(x)$ is the section-wise constant refractive index of a know multimode interference coupler, M is the number of modes that are able to propagate in the multimode interference coupler, $N_k$ are numerical coefficients and $\varphi_k(x)$ is a set of basic functions, such that the multimode interference coupler has along its longitudinal extension in the direction of the supply waveguide at least one longitudinal section, in which the refractive index has a locally oscillating profile in a direction x, which is substantially rectangular to the direction of the supply waveguide, wherein the maximum and minimum values of the locally oscillating profile are selected in such a way that, proceeding from the center of the multimode interference coupler, the amplitude increases towards the edge.

9. Method according to claim 8, **characterized in that** the basic functions $\varphi_k(x)$ describe the field distribution of the modes that are able to propagate in the multimode interference coupler by means of the refractive index $n_0(x)$.

10. Method according to claim 8 or 9, **characterized in that** the coefficients $N_k$ are determined in such a way that regarding the modes that are able to propagate the effective refractive index $n_{eff}$ decreases in a quadratic manner with the mode number.

11. Method according to any of claims 8 to 10, **characterized in that** only a sub-selection of the *M* modes that are able to propagate is included in the calculation.

12. Method according to any of claims 8 to 11, **characterized in that** the numerical coefficients $N_k$ are determined using a rigorous-mode solving method and/or a simulated annealing method.

13. Integrated visual component having a multimode interference coupler according to any of claims 1 to 7.

14. Computer program having a program code, which is made for carrying out a method according to any of claims 8 to 12 when the computer program is executed on a computer.

15. Computer program which has a program code and is stored on a machine-readably support, for carrying out the method according to any of claims 8 to 12, when the computer program is executed on a computer.

**Revendications**

1. Coupleur à interférences multi-mode (MMI) comprenant au moins un guide d'ondes d'entrée (108) et au moins un guide d'onde de sortie (110), dans lequel le coupleur à interférences multi-mode (112) comporte, le long de son extension longitudinale en direction du guide d'onde d'entrée (108), au moins un tronçon longitudinal dans lequel l'indice de réfraction, dans une direction qui s'étend sensiblement à angle droit par rapport à la direction du guide d'onde d'entrée (108), présente une évolution avec oscillations locales, **caractérisé en ce que** les valeurs maximales et minimales de l'évolution avec oscillations locales sont ainsi choisies que l'amplitude augmente en partant du milieu du coupleur à interférences multi-mode en direction de la bordure.

2. Coupleur à interférences multi-mode selon la revendication 1, **caractérisé en ce que** l'indice de réfraction effectif $n_{eff}$ pour les modes capables de propagation diminue approximativement en fonction du carré du nombre de mode.

3. Coupleur à interférences multi-mode selon l'une des revendications 1 ou 2, **caractérisé en ce que** l'évolution de l'indice de réfraction *n(x)* en fonction des coordonnées locales x, le long de la direction qui s'étend sensiblement à angle droit par rapport à la direction du guide d'ondes d'entrée (108), est obtenue par l'équation suivante :

$$n^2(x) = n_0^2(x) + \sum_{k=0}^{M-1} N_k \cdot \varphi_k(x) \ ,$$

dans laquelle $n_0(x)$ désigne l'indice de réfraction, constant tronçon par tronçon, d'un coupleur à interférences multi-mode connu, M est le nombre de modes capables de propagation du coupleur à interférences multi-mode, $N_k$ sont des coefficients numériques et $\varphi_k(x)$ désigne un groupe de fonctions de base.

**4.** Coupleur à interférences multi-mode selon l'une des revendications 1 à 3, **caractérisé en ce que** la distance entre valeur maximale et minimale voisine de l'évolution avec oscillations locales s'élève entre 50 nm et 400 nm.

**5.** Coupleur à interférences multi-mode selon l'une des revendications 3 à 4, **caractérisé en ce que** les fonctions de base $\varphi_k(x)$ décrivent la répartition de champ des modes du coupleur à interférences multi-mode avec l'indice de réfraction $n_0(x)$.

**6.** Coupleur à interférences multi-mode selon l'une des revendications 1 à 5, **caractérisé en ce que** celui-ci comprend deux guides d'ondes d'entrée (108), et le nombre des guides d'onde de sortie (110) est de deux ou quatre.

**7.** Coupleur à interférences multi-mode selon l'une des revendications 1 à 5, **caractérisé en ce que** celui-ci comprend exactement un guide d'ondes d'entrée (108), et le nombre des guides d'onde de sortie (110) est de deux, quatre ou dix.

**8.** Procédé pour la conception structurelle coupleur à interférences multi-mode, **caractérisé en ce que** l'on détermine l'évolution de l'indice de réfraction (n (x) en fonction des coordonnées locales x le long de la largeur du coupleur à interférences multi-mode au moyen de l'équation suivante :

$$n^2(x) = n_0^2(x) + \sum_{k=0}^{M-1} N_k \cdot \varphi_k(x) \ ,$$

dans laquelle $n_0(x)$ désigne l'indice de réfraction, constant tronçon par tronçon, d'un coupleur à interférences multi-mode connu, M est le nombre de modes capables de propagation du coupleur à interférences multi-mode, $N_k$ sont des coefficients numériques et $\varphi_k(x)$ désigne un groupe de fonctions de base, de sorte que le coupleur à interférences multimode comporte, le long de son extension longitudinale en direction du guide d'onde d'entrée, au moins un tronçon longitudinal dans lequel l'indice de réfraction, dans une direction qui s'étend sensiblement à angle droit par rapport à la direction du guide d'onde d'entrée, présente une évolution avec oscillations locales, et les valeurs maximales et minimales de l'évolution avec oscillations locales sont ainsi choisies que l'amplitude augmente en partant du milieu du coupleur à interférences multi-mode en direction de la bordure.

**9.** Procédé selon la revendication 8, **caractérisé en ce que** les fonctions de base $\varphi_k(x)$ décrivent la répartition de champ des modes du coupleur à interférences multi-mode avec l'indice de réfraction $n_0(x)$.

**10.** Procédé selon la revendication 8 ou 9, **caractérisé en ce que** les coefficients Nk sont ainsi déterminés que l'indice de réfraction effectif $n_{eff}$ pour les modes capables de propagation diminue approximativement en fonction du carré du nombre de mode.

**11.** Procédé selon l'une des revendications 8 à 10, **caractérisé en ce que** l'on utilise uniquement dans le calcul une sous-sélection des M modes capables de propagation.

**12.** Procédé selon l'une des revendications 8 à 11, **caractérisé en ce que** la détermination des coefficients numériques *Nk* est effectuée au moyen d'une procédure dite "à résolution de mode rigoureuse" ("rigorous-mode-solving") et/ou au moyen d'une procédure dite de "recuit simulé" (simulated annealing).

**13.** Composant optique intégré comprenant un coupleur à interférences multi-mode selon l'une des revendications 1 à 7.

**14.** Programme d'ordinateur comprenant un code de programme qui est réalisé pour mettre en oeuvre un procédé selon l'une des revendications 8 à 12 lorsque le programme d'ordinateur est exécuté sur un ordinateur.

**15.** Programme d'ordinateur avec un code de programme qui est mémorisé sur un support lisible à la machine, destiné à mettre en oeuvre le procédé selon l'une des revendications 8 à 12 lorsque le programme d'ordinateur est exécuté sur un ordinateur.

FIG 1   Stand der Technik

# FIG 2

# FIG 3

## FIG 4    Stand der Technik

## FIG 5

# FIG 6 Stand der Technik

# FIG 7

## FIG 8

## FIG 9    Stand der Technik

## FIG 10

## FIG 11

# FIG 12   Stand der Technik

# FIG 13

**IN DER BESCHREIBUNG AUFGEFÜHRTE DOKUMENTE**

**In der Beschreibung aufgeführte Patentdokumente**

- EP 1347318 A2
- US 2006126992 A1